# EUROPÄISCHE PATENTSCHRIFT

(11) **EP 1 902 280 B1**
(45) Veröffentlichungstag und Bekanntmachung des Hinweises auf die Patenterteilung: **18.02.2015**
(21) Anmeldenummer: 06762307.4
(22) Anmeldetag: 30.06.2006
(51) Int. Cl.: G01G 19/24

(54) **VORRICHTUNG UND VERFAHREN ZUM DOSIEREN MITTELS EINER WAAGE**
DEVICE AND METHOD FOR DOSING BY USING A WEIGHING SCALE
DISPOSITIF ET PROCEDE DE DOSAGE AU MOYEN D'UNE BALANCE

(30) Priorität: 05.07.2005 DE 102005031269
(43) Veröffentlichungstag der Anmeldung: 26.03.2008
(73) Patentinhaber: Sartorius Lab Instruments GmbH & Co. KG, 37075 Göttingen (DE)
(72) Erfinder: OLDENDORF, Christian, 37077 Göttingen (DE); WEITEMEIER, Swen, 37139 Adelebsen (DE); BERTOLDI, Jean Claude, 37079 Göttingen (DE)
(86) Internationale Anmeldenummer: PCT/EP2006/006373
(87) Internationale Veröffentlichungsnummer: WO 2007/003369

(56) Entgegenhaltungen:
- WO-A-2005/071506
- DE-A1- 4 407 433
- DE-A1- 10 111 730
- DE-A1- 10 134 281
- DE-U1- 29 914 925
- US-A1- 2003 141 116

## Beschreibung

Die Erfindung bezieht sich auf eine Vorrichtung und ein Verfahren zum Dosieren von mehreren Komponenten nach einem vorgegebenen Rezept mittels einer einen Rezeptspeicher enthaltenden Waage.

Vorrichtungen und Verfahren dieser Art sind allgemein bekannt. Beispielsweise ist in der DE 44 07 433 C2 eine Vorrichtung dieser Art beschrieben, bei der die Daten des Rezeptes erst während des Dosiervorganges allmählich in den Rezeptspeicher der Waage eingespeichert werden. Dadurch sind aber viele Komfortfunktioneh, wie zum Beispiel Dosieren gegen Null, und eine Kontrolle der richtigen Dosierung nicht möglich. Weiterhin ist es aus der DE 101 11 730 A1 bekannt, die Vorrichtung über eine drahtlose Kommunikationsverbindung mit einem Server zu verbinden und das vorgegebene Rezept über diese Kommunikationsverbindung vom Server in den Rezeptspeicher der Waage zu übertragen. Diese drahtlose Kommunikationsverbindung erfordert jedoch einen merklichen Hardwareaufwand und birgt die Gefahr, dass durch Übertragungsstörungen fehlerhafte Rezepturdaten eingespeichert werden. Diese Gefahr ist besonders im industriellen Umfeld erheblich.

Aufgabe der Erfindung ist es daher, eine Vorrichtung und ein Verfahren der eingangs genannten Art so weiterzubilden, dass eine einfache und sichere Übertragung der Rezeptdaten in den Rezeptspeicher der Waage sowie eine Kontrolle und gegebenenfalls auch eine Dokumentation des Dosiervorganges möglich ist.

Erfindungsgemäß wird dies durch eine Vorrichtung gemäß Anspruch 1 beziehungsweise durch ein Verfahren gemäß Anspruch 7 erreicht.

Durch die Benutzung eines Transponders als tragbarem Zwischenspeicher für das Rezept kann der Transponder beispielsweise an einer zentralen EDV-Anlage, die alle aktuellen Rezepte enthält, mit dem abzuarbeitenden Rezept geladen werden, anschließend zur Waage transportiert werden und dort mittels der Transponder-Leseeinheit in den Rezeptspeicher der Waage übertragen werden. Durch die Benutzung des Transponders ist eine berührungslose Datenübertragung möglich, die wegen der geringen Reichweite der Abfragesignale der Transponder-Leseeinheit sehr störsicher ist und die unempfindlich gegen Verschmutzungen ist, wie sie beispielsweise beim Dosieren von Lacken und Farben leicht vorkommen können. Auch wenn die Dosiervorrichtung in einem explosionsgefährdeten Bereich steht, ist der Datentransport mittels Transponder problemlos.

Durch die Transponder-Leseeinheit ist es weiterhin möglich, die Durchführung des Dosiervorganges zu kontrollieren. Dazu weisen vorteilhafterweise die Vorratsbehälter für die einzelnen Komponenten Transponder auf. Beim Vorbeiführen der Vorratsbehälter an der Transponder-Leseeinheit lassen sich dadurch die einzelnen Komponenten identifizieren und mit den vom Rezept vorgegebenen Komponenten vergleichen. Auf diese Weise wird eine wirksame Kontrolle der Rezeptur erreicht.

Die Benutzung von Transponder-Leseeinheiten zusammen mit Waagen ist an sich bekannt, zum Beispiel aus der DE 299 14 925 U1, der DE 101 34 281 A1 oder US 2003/0141116 A1. Der Transponder wird aber in allen Schriften nur zur Identifizierung von Wägegut, das sich aktuell auf der Waage befindet, oder zur Identifizierung von Bedienpersonen benutzt. Für die Benutzung eines Transponders als unabhängig von einem Wägegut transportablem Speichermedium für Rezepte, das Einspeichern dieser Daten in den Rezeptspeicher der Waage und den Einsatz zur Kontrolle der eindosierten Komponenten beim Dosiervorgäng findet sich in diesen Schriften kein Hinweis.

In einer besonders vorteilhaften Ausgestaltung umfasst die Transponder-Leseeinheit auch eine Transponder-Schreibeinheit. Dadurch ist es möglich, in der Elektronik der Waage gespeicherte Daten auf einen Transponder zu übertragen. Zum Beispiel können nach Abschluss des Dosiervorganges die Ist-Werte der einzelnen Komponenten auf einen (neuen) Transponder eingespeichert werden und dieser Transponder kann am gefüllten Dosierbehälter befestigt werden oder auch den Versandpapieren zugefügt werden. Dadurch erhält der Empfänger der fertigen Mischung die Ist-Werte der einzelnen Komponenten und ist im Bedarfsfall in der Lage, die Mischung zu kontrollieren. Dadurch wird also eine Dokumentation erreicht und im Falle eines Fehlers die Rückverfolgbarkeit gewährleistet.

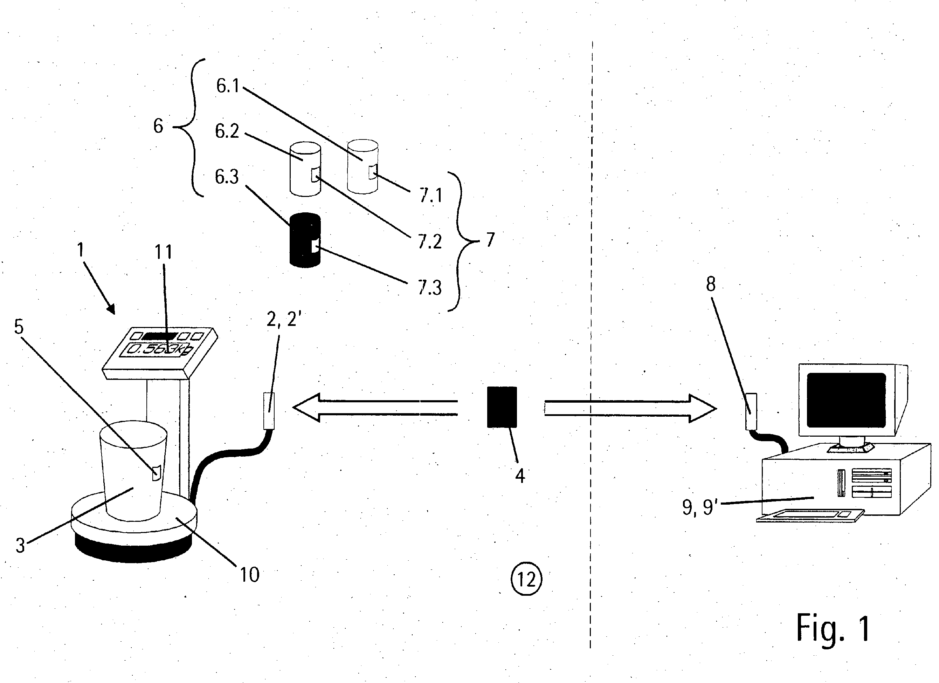

Die Erfindung wird im Folgenden zusammen mit weiteren vorteilhaften Ausgestaltungen und Anwendungen anhand der einzigen Figur beschrieben, die eine Übersicht über die einzelnen Teile der Dosiervorrichtung zeigt.

Die Dosiervorrichtung umfasst eine Waage 1 mit einer Waagschale 10 und einer Anzeige 11. Auf der Waagschale 10 steht der Dosierbehälter 3, in den der Bediener der Dosiervorrichtung die einzelnen Komponenten gemäß einem vorgegebenen Rezept eindosieren soll. Die einzelnen Komponenten der herzustellenden Mischung befinden sich in Vorratsbehältern 6, von denen in der Figur beispielhaft drei Stück dargestellt sind (6.1... 6.3). Auf jedem Vorratsbehälter befindet sich ein Transponder 7, auf dem Vorratsbehälter 6.1 der Transponder 7.1, auf dem Vorratsbehälter 6.2 der Transponder 7.2 und auf dem Vorratsbehälter 6.3 der Transponder 7.3. Weiter ist in der Figur eine EDV-Anlage 9 als Speicher für alle mittels der Dosiervorrichtung dosierbaren Rezepte dargestellt. Diese EDV-Anlage umfasst unter anderem eine Transponder-Schreib- und Leseeinheit 8 zum Beschreiben und Auslesen von Transpondern. Weiterhin ist in der Figur ein (transportabler) Transponder 4 erkennbar.

Der Aufbau und die Funktionsweise von Waagen, EDV-Anlagen, Transpondern und Transponder-Leseeinheiten beziehungsweise Transponder-Schreib- und Leseeinheiten ist jedem Fachmann bekannt, sodass Einzelheiten hier nicht erläutert werden müssen.

Das Zusammenspiel der einzelnen Teile der Dosiervorrichtung wird im Folgenden anhand von Beispielen erläutert:

### Beispiel 1 (Grundversion):

Der Bediener der Dosiervorrichtung ruft in der EDV-Anlage 9 das gewünschte Rezept auf und überträgt es mittels der Transponder-Schreib- und Leseeinheit 8 auf den Transponder 4. Dann nimmt er den Transponder 4 mit in den Mischraum 12 und überträgt das Rezept mittels der Transponder-Leseeinheit 2 in den Rezeptspeicher der Waage 1. Damit ist die Waage 1 für den Dosiervorgang vorbereitet; sie zeigt die Bezeichnung der ersten Komponente und die einzudosierende Menge (mit negativem Vorzeichen) in der Anzeige 11 der Waage an. Der Bediener nimmt dann den Vorratsbehälter dieser Komponente - zum Beispiel also den Vorratsbehälter 6.2 - und führt diesen so an der Transponder-Leseeinheit 2 vorbei, dass der Transponder 7.2 gelesen werden kann. Die Elektronik der Waage 1 prüft dann, ob die auf dem Transponder 7.2 gespeicherte Angabe der Substanz, die sich im Vorratsbehälter 6.2 befindet, mit der angeforderten ersten Komponente des Rezeptes übereinstimmt und gibt bei Nichtübereinstimmung ein Fehlersignal ab (zum Beispiel blinkend "Falsche Komponente" und ein akustisches Fehlersignal). Bei Übereinstimmung wird die Waage tariert und für die Dosierung freigegeben. Ist das Zielgewicht der ersten Komponente erreicht (plus/minus einer vorgegebenen Toleranz), so geht die Waage automatisch zur zweiten Komponente über, die in gleicher Weise wie bei der ersten Komponente angefordert, kontrolliert und vom Bediener dosiert wird. In gleicher Weise werden die weiteren Komponenten des Rezeptes abgearbeitet.

Durch das beschriebene Verfahren wird zum einen eine einfache und sichere Übertragung der Rezept-Daten vom zentralen Rezeptspeicher 9' der EDV-Anlage zum Rezeptspeicher der Waage erreicht. Für diese Übertragung wird weder eine Kabelverbindung noch eine Funkverbindung zwischen Waage und EDV-Anlage benötigt, wodurch der Hardwareaufwand gering ist. Dies gilt insbesondere bei einem größeren räumlichen Abstand zwischen Waage und EDV-Anlage und im Falle, dass der Mischraum als explosionsgefährdet eingestuft ist. Auch falls mehrere Dosiervorrichtungen von einer einzigen EDV-Anlage mit Rezepten versorgt werden, ist die erfindungsgemäße Art der Datenübertragung mittels eines Transponders sehr zuverlässig und verhindert zum Beispiel, dass ein Rezept versehentlich auf eine falsche Waage übertragen wird.

Durch den Transponder an den einzelnen Vorratsbehältern ist darüber hinaus eine effektive Kontrolle der dosierten Substanzen gewährleistet, sodass Fehldosierungen - im Sinne einer falschen Komponente - sicher verhindert werden.

### Beispiel 2 (mit freier Wahl der Reihenfolge):

Die in Beispiel 1 dargestellte Verfahrensweise kann so ergänzt werden, dass die Waage in der Anzeige zwar eine gewisse Reihenfolge der einzelnen Komponenten für das Dosieren vorschlägt, aber auch andere Reihenfolgen erlaubt. Bei der Prüfung, ob die auf dem Transponder 7 gespeicherte Substanzangabe mit der angeforderten Komponente übereinstimmt, wird also nur ein Fehlersignal ausgegeben, wenn diese Substanz gar nicht in der Rezeptur erscheint beziehungsweise schon dosiert wurde. Wird eine erlaubte Substanz erkannt, so wird die zu dosierende Menge dieser Substanz in der Anzeige angezeigt und gegebenenfalls auch der Name der Substanz und die Dosierung dieser Substanz kann in gewohnter Weise erfolgen.

Diese Variante gibt dem Bediener der Waage mehr Spielraum als die Variante gemäß Beispiel 1.

### Beispiel 3 (mit zusätzlicher Transponder-Schreibeinheit):

Weist die Dosiervorrichtung zusätzlich zur Transponder-Leseeinheit 2 auch eine Transponder-Schreibeinheit 2' auf, die gegebenenfalls auch in die Transponder-Leseeinheit 2 integriert sein kann - wie in der Figur gezeichnet - , so können auch Daten von der Waage 1 in einen Transponder eingeschrieben werden. So können zum Beispiel die eindosierten Ist-Werte der einzelnen Komponenten in der Elektronik der Waage abgespeichert werden und nach Abschluss der Dosierung aller Komponenten in einen Transponder eingeschrieben werden. Dies kann zum Beispiel der Transponder 5 sein, der am Dosierbehälter 3 befestigt ist oder nach dem Einschreiben der Daten am Dosierbehälter 3 in geeigneter Weise befestigbar ist. Dies kann aber auch der Transponder 4 sein. In einer vorteilhaften Ausgestaltung erlauben die Speichermittel in der Elektronik der Waage das Abspeichern der Ist-Werte für eine Vielzahl von Dosierungen. Dann können zum Beispiel nach Abschluss einer Dosierreihe mit gleichem Rezept die Ist-Werte aller Dosierungen über die Transponder-Schreibeinheit 2' auf den Transponder 4 mit dem Rezept überschrieben werden und mit Hilfe des Transponders 4 zur zentralen EDV-Anlage 9 übertragen werden. Die Ist-Daten können dort archiviert und für diverse Zwecke genutzt werden: zum Beispiel für die Bestandsfortschreibung der einzelnen Substanzen, für die Erstellung von Lieferscheinen und/oder Rechnungen, für statistische Auswertungen etc.. - Die Übertragung größerer Datenmengen mittel des Transponders 4 setzt natürlich das Vorhandensein eines entsprechend großen Speicherplatzes auf dem Transponder voraus.

Die eben erwähnte Bestandsfortschreibung der einzelnen Substanzen auf der Ebene der zentralen EDV-Anlage 9 kann selbstverständlich auch auf der Ebene der einzelnen Vorratsbehälter 6 erfolgen: Wird der Vorratsbehälter 6 mit dem jeweils zugehörigen Transponder 7 nicht nur zu Beginn der Dosierung dieser Komponente an der Transponder-Lese- und Schreibeinheit 2, 2' vorbeibewegt und seine Daten zur Kontrolle ausgelesen - wie im Beispiel 1 erläutert - , sondern auch nach Abschluss der Dosierung dieser Komponente, so kann die gerade verbrauchte Substanzmenge aus der Elektronik der Waage übernommen werden und vom bisherigen Nettoinhalt subtrahiert werden. Dann ist im Transponder 7 immer der noch vorhandene Nettoinhalt in diesem Vorratsbehälter gespeichert. Dadurch kann bei jeder Dosierung nicht nur die Richtigkeit der Substanz kontrolliert werden, sondern es kann auch geprüft werden, ob die zur Verfügung stehende Menge noch für die geplante Dosierung ausreicht.

Ist der Transponder 5 von vornherein am Dosierbehälter 3 befestigt, so können in diesen Transponder 5 Daten des Dosierbehälters eingespeichert sein, wie zum Beispiel Größe/Volumen und Material. Wird dann vor dem Aufsetzen des Dosierbehälters auf die Waagschale der Waage der Dosierbehälter an der Transponder-Leseeinheit 2 vorbeigeführt, so kann die Elektronik der Waage prüfen, ob der Dosierbehälter für die vorgesehene Dosierung geeignet ist. Dadurch ist auch die versehentliche Benutzung eines falschen Dosierbehälters ausgeschlossen.

Wie sich aus den beschriebenen Beispielen ergibt, erfolgt das Übertragen des Rezeptes in den Rezeptspeicher der Waage und das Abarbeiten der Dosierung ohne dass an der Waage eine Bedientaste betätigt werden muss. Die beschriebene Vorrichtung und das beschriebene Verfahren sind also besonders für solche Anwendungsfälle optimal, bei denen die Bedienungsperson Handschuhe trägt/tragen muss, oder die Gefahr der Verschmutzung der Waage beim Bedienen groß ist.

Im Vorstehenden ist immer davon ausgegangen, dass die Bedienungsperson immer die im Rezept geforderte Substanzmenge eindosiert. Eine versehentliche Überdosierung einer Komponente lässt sich selbstverständlich durch geringfügiges Nachdosieren der anderen Komponenten "reparieren". In der schon zitierten DE 44 07 433 C2 ist ein Verfahren dazu angegeben. Da in der erfindungsgemäßen Vorrichtung das komplette Rezept im Rezeptspeicher der Waage abgespeichert ist, lässt sich dieses Korrekturprogramm mit sehr wenigen Tastenbetätigungen an der Waage abarbeiten.

Aber auch gewollte Abweichungen vom Rezept sind möglich. Dies ist zum Beispiel bei der Nachlackierung älterer Autos notwendig, um den Originalfarbton an den ausgeblichenen Farbton anzupassen. Durch die gemäß Beispiel 3 vorgesehene Einspeicherung der Ist-Werte der einzelnen Komponenten auf dem Transponder 5 ist eine eindeutige Dokumentation dieser Sondermischung am Behälter gegeben und eine versehentliche Verwechslung mit Behältern, die die Standardmischung enthalten, ist nicht möglich. Auch im Falle, dass die Sondermischung den gewünschten Farbton noch nicht ganz getroffen hat, kann die Ist-Zusammensetzung der Sondermischung über die Transponder-Leseeinheit 2 wieder in den Rezeptspeicher der Waage 1 eingelesen werden und der Bediener der Waage kann durch weitere Abweichungen von diesem Rezept eine verbesserte Sondermischung herstellen.

Einzelheiten der Programmierung, wie zum Beispiel das Protokoll der Datenübertragung oder Prüfroutinen zur Abwehr "falscher" Transponder, die nicht zur Dosiervorrichtung gehören und versehentlich vor eine der Transponder-Leseeinheiten gehalten werden, Prüfbits zur Sicherstellung einer fehlerfreien Datenübertragung und Datenspeicherung etc., sind im Vorstehenden nicht erläutert, da jeder Elektronikfachmann diese leicht erarbeiten kann.

### Bezugszeichenliste

- 1: Waage
- 2: Transponder-Leseeinheit
- 2': Transponder-Schreibeinheit
- 3: Dosierbehälter
- 4: Transponder
- 5: Transponder (am Dosierbehälter)
- 6, 6.1, 6.2, 6.3: Vorratsbehälter
- 7, 7.1, 7.2, 7.3: Transponder am Vorratsbehälter
- 8.: Transponder-Schreib- und Leseeinheit der EDV-Anlage
- 9: EDV-Anlage
- 9': Zentraler Rezeptspeicher
- 10: Waagschale der Waage
- 11: Anzeige der Waage
- 12: Mischraum

## Patentansprüche

1. Vorrichtung zum Dosieren von mehreren Komponenten nach einem vorgegebenen Rezept, mit einer einen Rezeptspeicher enthaltenden Waage (1), und mit einem Transponder (4), **dadurch gekennzeichnet, dass** die Waage (1) mit einer Transponder-Leseeinheit (2) ausgerüstet ist, dass das vorgegebene Rezept auf dem Transponder (4) speicherbar ist und über die Transponder-Leseeinheit (2) in den Rezeptspeicher übertragbar ist und dass die Transponder-Leseeinheit (2) so ausgerüstet ist, daß sie zusätzlich zur Kontrolle der eindosierten Komponenten beim Dosiervorgang einsetzbar ist.

2. Vorrichtung nach Anspruch 1, **dadurch gekennzeichnet, dass** die Vorratsbehälter (6) für die einzelnen Komponenten jeweils mit Transpondern (7) versehen sind und dass auf diese Weise die einzelnen Komponenten durch die Transponder-Leseeinheit (2) identifizierbar sind.

3. Vorrichtung nach Anspruch 1 oder 2, **dadurch gekennzeichnet, dass** die Transponder-Leseeinheit (2) auch eine Transponder-Schreibeinheit (2') umfasst, dass die Elektronik der Waage (1) Speichermittel enthält, in denen die Ist-Werte der Dosierung abspeicherbar sind, und dass die Ist-Werte der Dosierung mittels der Transponder-Schreibeinheit (2') in einen Transponder (4, 5) einspeicherbar sind.

4. Vorrichtung nach Anspruch 3, **dadurch gekennzeichnet, dass** der Transponder (5) dem Dosierbehälter (3) zuordenbar ist.

5. Vorrichtung nach Anspruch 3, **dadurch gekennzeichnet, dass** in den Speichermitteln die Ist-Werte für eine Vielzahl von Dosierungen abspeicherbar sind.

6. Vorrichtung nach einem der Ansprüche 1 - 5, **dadurch gekennzeichnet, dass** in der Elektronik der Waage (1) Rechen- und Steuermittel vorhanden sind, die bei einer versehentlichen Überdosierung einer Komponente aktivierbar sind und ein Korrekturprogramm zum Nachdosieren der restlichen Komponenten beinhalten.

7. Verfahren zum Dosieren von mehreren Komponenten nach einem vorgegebenen Rezept mittels einer einen Rezeptspeicher enthaltenden Waage (1), **dadurch gekennzeichnet, dass** das vorgegebene Rezept von einem zentralen Rezeptspeicher (9') auf einen Transponder (4) übertragen wird, dass der Transponder (4) vom zentralen Rezeptspeicher (9') zur Waage (1) transportiert wird, dass das auf dem Transponder (4) gespeicherte Rezept von einer Transponder-Leseeinheit (2), die an die Waage (1) angeschlossen oder in die Waage (1) eingebaut ist, gelesen und in den Rezeptspeicher der Waage übertragen wird, und dass die Transponder-Leseeinheit (2) zusätzlich zur Kontrolle der eindosierten Komponente beim Dosiervorgang eingesetzt wird.

8. Verfahren nach Anspruch 7, **dadurch gekennzeichnet, dass** die durch die Transponder-Leseeinheit (2) und durch einen Transponder (7) am jeweiligen Vorratsbehälter (6) identifizierte Komponente mit den im Rezept vorgegebenen, noch nicht dosierten Komponenten verglichen wird, dass bei Übereinstimmung das Sollgewicht dieser Komponente in die Anzeige (11) der Waage (1) übernommen wird und dass bei Nichtübereinstimmung eine Fehlermeldung ausgegeben wird.

9. Verfahren nach Anspruch 8, **dadurch gekennzeichnet, dass** bei Erreichen des Sollgewichtes der gerade dosierten Komponente, plus/minus einer vorgegebenen Toleranz, die Waage (1) automatisch für eine nächste Komponente aufnahmebereit gemacht wird.

10. Verfahren nach Anspruch 8 oder 9, wobei die Transponder-Leseeinheit (2) auch eine Transponder-Schreibeinheit (2') umfasst, **dadurch gekennzeichnet, dass** im Transponder (7) am Vorratsbehälter (6) die Menge der Komponente abgespeichert ist und dass nach dem Ende der Dosierung dieser Komponente die im Vorratsbehälter verbliebene Restmenge durch die Transponder-Schreibeinheit (2') in diesem Transponder (7) am Vorratsbehälter (6) aktualisiert wird.

11. Verfahren nach einem der Ansprüche 7 oder 8, wobei die Transponder-Leseeinheit (2) auch eine Transponder-Schreibeinheit (2') umfasst, **dadurch gekennzeichnet, dass** der Ist-Wert jeder Komponente in einem Speicher in der Elektronik der Waage (1) abgespeichert wird, dass nach erfolgter Dosierung aller Komponenten die Ist-Werte jeder Komponente über die Transponder-Schreibeinheit (2') in einen Transponder (5) eingespeichert werden und dass der Transponder (5) dem Dosierbehälter (3) zugeordnet wird.

12. Verfahren nach einem der Ansprüche 7 oder 8, wobei die Transponder-Leseeinheit (2) auch eine Transponder-Schreibeinheit (2') umfasst, **dadurch gekennzeichnet, dass** der Ist-Wert jeder Komponente in einem Speicher in der Elektronik der Waage (1) abgespeichert wird, dass nach Abschluss einer Vielzahl von Dosierungen die Ist-Werte jeder Komponente für alle Dosierungen über die Transponder-Schreibeinheit (2') in einen Transponder (4) eingespeichert werden und dass diese Daten mittels des Transponders (4) zu einer EDV-Anlage (9) übermittelt werden.

## Claims

1. Device for admetering a plurality of components in accordance with a predetermined recipe, comprising scales (1) including a recipe memory, and a transponder (4), **characterised in that** the scales (1) are equipped with a transponder reader (2), that the predetermined recipe can be stored on the transponder (4) and can be transferred by way of the transponder reader (2) to the recipe memory and that the transponder reader (2) is so equipped that it is additionally usable for checking the admetered components during the admetering process.

2. Device according to claim 1, **characterised in that** the storage containers (6) for the individual components are each provided with a respective transponder (7) and that the individual components are identifiable in this way by the transponder reader (2).

3. Device according to claim 1 or 2, **characterised in that** the transponder reader (2) also comprises a transponder writing unit (2'), that the electronic system of the scales (1) includes storage means in which the actual values of the admetering can be stored and that the actual values of the admetering can be stored by means of the transponder writing unit (2') in a transponder (4, 5).

4. Device according to claim 3, **characterised in that** the transponder (5) can be associated with the admetering container (3).

5. Device according to claim 3, **characterised in that** the actual values for a plurality of admeterings can be stored in the storage means.

6. Device according to any one of claims 1 to 5, **characterised in that** computing and control means, which are activatable in the case of erroneous overdosing of a component and include a correction program for adjusted admetering of the remaining components, are present in the electronic system of the scales (1).

7. Method of admetering a plurality of components in accordance with a predetermined recipe by means of scales (1) including a recipe memory, **characterised in that** the predetermined recipe is transferred from a central recipe memory (9') to a transponder (4), that the transponder (4) is transported from the central recipe memory (9') to the scales (1), that the recipe stored on the transponder (4) is read by a transponder reader (2), which is connected with the scales (1) or incorporated in the scales (1), and transferred to the recipe memory of the scales, and that the transponder reader (2) is additionally used for checking the admetered components during the admetering process.

8. Method according to claim 7, **characterised in that** the components identified by the transponder reader (2) and by a transponder (7) at the respective storage container (6) are compared with the components which are preset in the recipe and not yet admetered, that in the case of correspondence the target weight of these components is take over to the display (11) of the scales (1) and that in the case of non-correspondence an error report is issued.

9. Method according to claim 8, **characterised in that** when the target weight of the just admetered components, plus/minus a predetermined tolerance, is reached the scales (1) are automatically made ready to receive a next component.

10. Method according to claim 8 or 9, wherein the transponder reader (2) also comprises a transponder writing unit (2'), **characterised in that** the quantity of the components is stored in the transponder (7) at the storage container (6) and that after the end of admetering of these components the residual amount remaining in the storage container is updated by the transponder writing unit (2') in this transponder (7) at the storage container (6).

11. Method according to one of claims 7 and 8, wherein the transponder reader (2) also comprises a transponder writing unit (2'), **characterised in that** the actual value of each component is stored in a memory in the electronic system of the scales (1), that after admetering of all components has taken place the actual values of each component are stored in a transponder (5) by way of the transponder writing unit (2') and that the transponder (5) is associated with the admetering container (3).

12. Method according to one of claims 7 and 8, wherein the transponder reader (2) also comprises a transponder writing unit (2'), **characterised in that** the actual value of each component is stored in a memory in the electronic system of the scales (1), that after the conclusion of a plurality of admeterings the actual values of each component for all admeterings are stored by way of the transponder writing unit (2') in a transponder (4) and that these data are transmitted by means of the transponder (4) to an electronic data processing unit (9).

## Revendications

1. Dispositif pour le dosage de plusieurs composants selon une formule prédéterminée comprenant une balance (1), contenant une mémoire de stockage de formules, et comprenant un transpondeur (4), **caractérisé en ce que** la balance (1) est équipée d'une unité de lecture (2) de transpondeur, que la formule prédéterminée peut être mise en mémoire dans le transpondeur (4) et peut être transmise dans la mémoire de stockage de formules par l'intermédiaire de l'unité de lecture (2) de transpondeur, et que l'unité de lecture (2) de transpondeur est ainsi équipée qu'elle peut être mise en service de manière complémentaire pour le contrôle des composants incorporés dans la formule lors du processus de dosage.

2. Dispositif selon la revendication 1, **caractérisé en ce que** les récipients de réserve (6) des composants individuels sont pourvus, chacun, d'un transpondeur (7) et que les composants individuels peuvent être identifiés de cette manière par l'unité de lecture (2) de transpondeur.

3. Dispositif selon les revendications 1 ou 2, **caractérisé en ce que** l'unité de lecture (2) de transpondeur comprend également une unité d'écriture (2') de transpondeur, que l'électronique de la balance (1) contient des moyens de stockage de données, dans lesquels les valeurs réelles du dosage peuvent être retrouvées, et que les valeurs réelles du dosage peuvent être mises en mémoire dans un transpondeur (4, 5) au moyen de l'unité d'écriture (2') de transpondeur.

4. Dispositif selon la revendication 3, **caractérisé en ce que** le transpondeur (5) peut être associé au récipient de réserve (3).

5. Dispositif selon la revendication 3, **caractérisé en ce que** les valeurs réelles peuvent êtres mises en mémoire pour une multiplicité de dosages dans les moyens de stockage de données.

6. Dispositif selon l'une des revendications 1-5, **caractérisé en ce que** des moyens de calcul et de commande sont présents dans l'électronique de la balance (1), qui peuvent être activés lors d'un surdosage involontaire d'un composant et contiennent un programme de correction pour le dosage en conséquence des autres composants.

7. Procédé pour le dosage de plusieurs composants selon une formule prédéterminée au moyen d'une balance (1) contenant une mémoire de formules, **caractérisé en ce que** la formule prédéterminée est transmise à partir d'une mémoire de stockage de formules centrale (9') sur un transpondeur (4), que le transpondeur (4) est transporté de la mémoire de stockage centrale (9') vers la balance (1), que la formule mise en mémoire dans le transpondeur (4) est lue par une unité de lecture (2) de transpondeur, qui est reliée avec la balance (1) ou qui est intégrée à la balance (1), et est transmise dans la mémoire de stockage de formules de la balance, et que l'unité de lecture (2) de transpondeur est mise en service de manière complémentaire pour le contrôle des composants incorporés dans la formule lors du processus de dosage.

8. Procédé selon la revendication 7, **caractérisé en ce que** les composants identifiés par l'unité de lecture (2) de transpondeur et par un transpondeur (7) sur le récipient de réserve (6) correspondant sont comparés avec les composants non encore incorporés au dosage de sorte qu'une indication (11) de la balance (1) est prise en compte lorsqu'une concordance avec un poids souhaité de ces composants est atteinte et qu'une indication d'erreur est émise s'il n'y a pas de concordance.

9. Procédé selon la revendication 8, **caractérisé en ce que** lorsque le poids souhaité des composants venant d'être dosés est atteint, avec une tolérance prédéterminée en plus/en moins, la balance (1) est rendue automatiquement prête pour une nouvelle pesée pour le composant suivant.

10. Procédé selon les revendications 8 ou 9, dans lequel l'unité de lecture (2) de transpondeur comprend également une unité d'écriture (2') de transpondeur, **caractérisé en ce que** la quantité des composants est mise en mémoire dans le transpondeur (7) sur le récipient de réserve (6) et qu'à la fin du dosage de ces composants la quantité résiduelle restant dans le récipient de réserve est actualisée dans ce transpondeur (7) sur le récipient de réserve (6) par l'unité d'écriture (2') de transpondeur.

11. Procédé selon 'une des revendications 7 ou 8, dans lequel l'unité de lecture (2) de transpondeur comprend également une unité d'écriture (2') de transpondeur, **caractérisé en ce que** la valeur réelle de chaque composant est mise en mémoire dans une mémoire de stockage dans l'électronique de la balance (1), qu'après un dosage de tous les composants effectué avec succès, les valeurs réelles de chaque composant sont mises en mémoire dans un transpondeur (5) par l'unité d'écriture (2') de transpondeur et que le transpondeur (5) est associé avec le récipient de dosage (3).

12. Procédé selon l'une des revendications 7 ou 8, dans lequel l'unité de lecture (2) de transpondeur comprend également une unité d'écriture (2') de transpondeur, **caractérisé en ce que** la valeur réelle de chaque composant est mise en mémoire dans l'électronique de la balance (1), qu'à la fin d'un grand nombre de dosages, les valeurs réelles de chaque composant pour tous les dosages sont mises en mémoire dans un transpondeur (4) par l'unité d'écriture (2') de transpondeur et que ces données sont transmises vers une installation électronique de traitement de données (9) au moyen du transpondeur (4).
